# EUROPEAN PATENT APPLICATION

(11) **EP 1 378 390 A1**
(43) Date of publication of application: **07.01.2004**
(21) Application number: 02425431.0
(22) Date of filing: 01.07.2002
(51) Int. Cl.: B60K 15/03, F17C 13/08

(54) **Toroidal tank for liquefied gas (LPG)**

(71) Applicant: Fratelli Ghezzi S.r.l., 24048 Curnasco di Treviolo (Bergamo) (IT)
(72) Inventor: Ghezzi, Venanzio, 24048 Curnasco Di Treviolo (IT); Ghezzi, Alfredo, 24048 Curnasco Di Treviolo (IT); Ghezzi, Paolino, 24048 Curnasco Di Treviolo (IT); Ghezzi, Guerino, 24048 Curnasco Di Treviolo (IT)
(74) Representative: Long, Giorgio

(57) **Abstract**

The invention herein concerns a toroidal shaped tank for LPG (Liquid Petroleum Gas), of the type used for motor vehicles, fitted with a system, which isolates the valve unit from the external environment.

More particularly, the invention herein concerns a tank (1) for LPG of a mainly toroidal shape, including a hollow body (2) and a filler union (3) that connects the inside of the tank with the outside, said substantially toroidal tank defining a central empty cavity (5) into which the said filler union (3) juts, said tank (1) also including upper (6) and lower (7) closing means for said central cavity (5), characterised by the fact that said upper (6) and lower (7) closing means are attached to the surface of said hollow body (2) independently from each other.

## Description

The invention herein concerns a toroidal shaped (or "donut-shaped") tank for LPG (Liquid Petroleum Gas), of the type used for motor vehicles, fitted with a system, which isolates the valve unit from the external environment.

Toroidal LPG tanks are already well-known. For example GB 2 095 808 in the name of Kosan Cylindric A/S, describes a toroidal shaped tank where the opening for filling the tank is placed on the external circumference of the donut. These tanks are usually fitted in place of the motor vehicle's spare wheel, thereby limiting the amount of space occupied by the tank and leaving most of the baggage compartment of the vehicle free. To further optimise the dimension of the tank, some toroidal tanks have been invented whose loading opening, to which the valve unit and the gauge are connected, is placed on the internal circumference of the donut, therefore facing the central hole.

To avoid contaminating the baggage compartment and consequently the vehicle passenger compartment from accidental LPG leaks, it is important that the space where the valve unit is lodged is suitably isolated from the surrounding areas. The patent EP 0 610 416, in the name of I.CO.M. srl, tackles this technical problem and solves it by enclosing the central space of the donut, where the outlet of the loading-opening fitted with a valve unit is situated, between a lower plate and an upper plate held together respectively by a screw-nut screw system that connects them through the central cavity. Although this isolation system for the valve unit resolves the problem set out above, it does not allow easy, fast access to the valve unit when necessary, as it is necessary to remove the tank from its lodging to gain access to the lower plate and therefore to the lower end of the screw for disassemble the two plates.

The problem that is at the foundation of this invention is therefore that of providing a toroidal shaped LPG tank that has a valve unit that is isolated from the external environment, but which can be easily and rapidly accessed.

This problem is solved by a toroidal shaped tank for LPG as shown in the attached claims.

Further characteristics and advantages of the toroidal-shaped LPG tank, subject of the herein invention, will be further revealed by the description of an embodiment, given here below as an indication but not as a limiting one, with reference to the following figures:

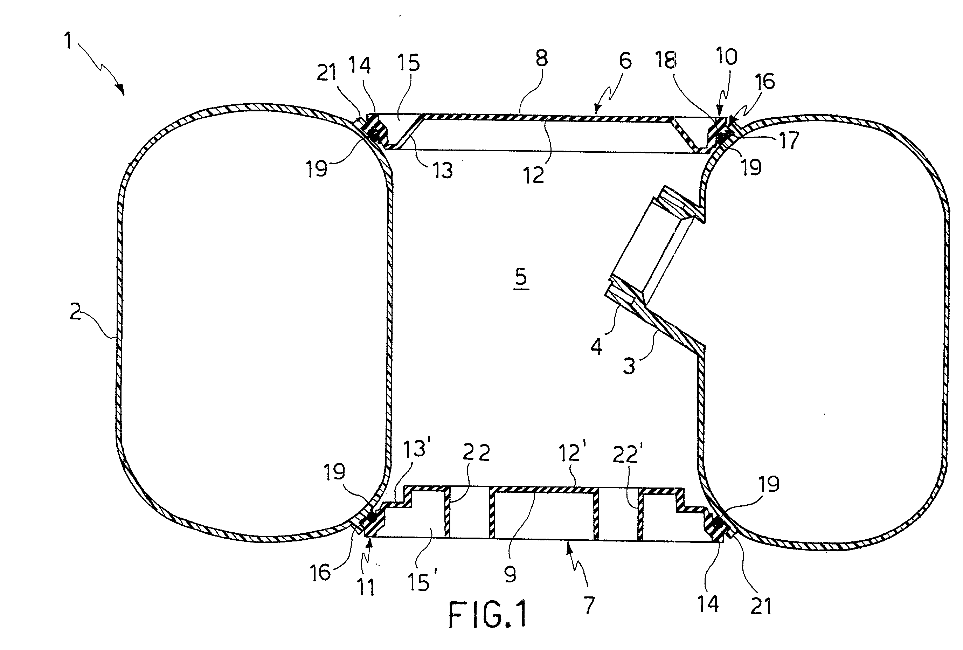

Figure 1, shows a side section view of the toroidal LPG tank as according to the herein invention;
Figure 2A shows a perspective view of the upper cover of the central cavity of the -tank subject of this invention;
Figure 2B shows a flat view of the external face of the cover in Figure 2A;
Figure 2C shows a flat view of the internal face of the cover in Figure 2A;
Figure 2D shows a side thickness view of the cover in Figure 2A;
Figure 3A, shows a perspective view of the lower cover of the central cavity of the tank of this invention;
Figure 3B shows a flat view of the external face of the cover in Figure 3A;
Figure 3C shows a flat view of the internal face of the cover in Figure 3A;

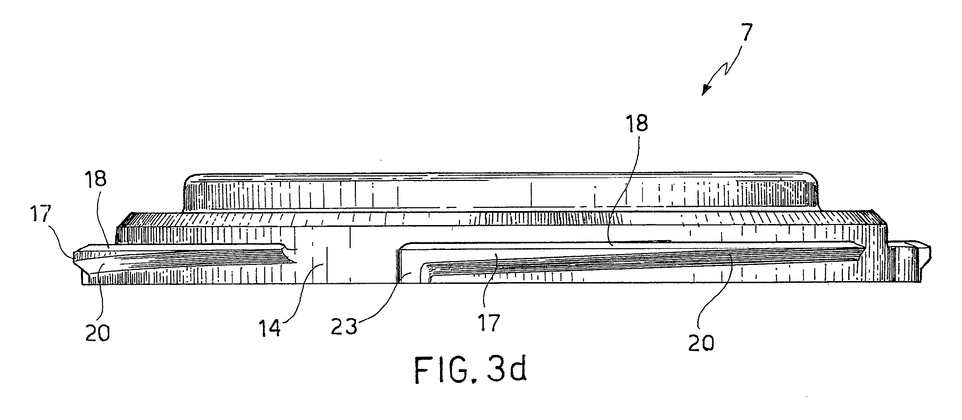

Figure 3D shows a side thickness view of the cover in Figure 3A;

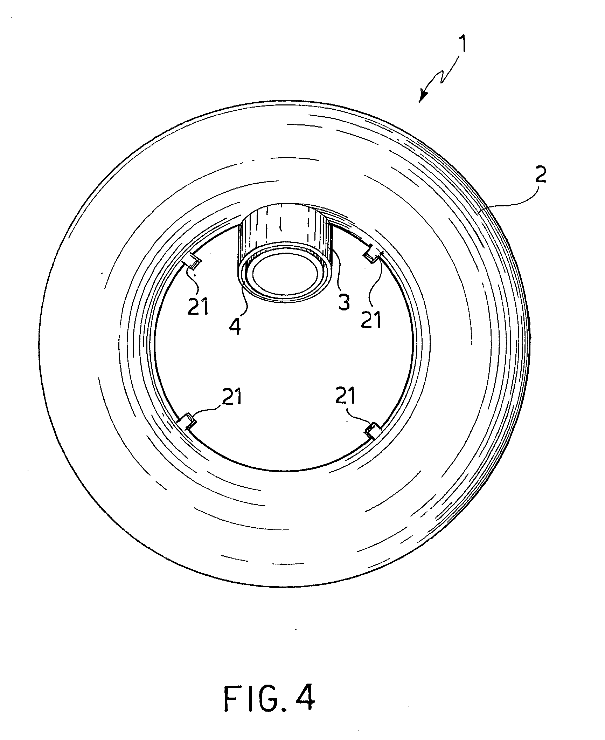

Figure 4 shows a plan view of the toroidal tank without its cover;
Figure 5 shows a section view of a detail of the upper closure means.

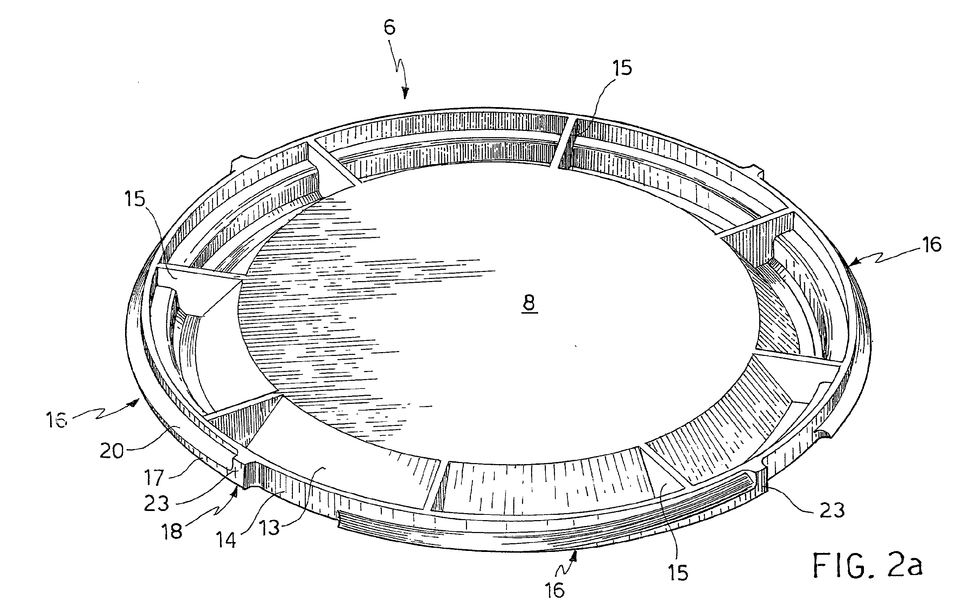

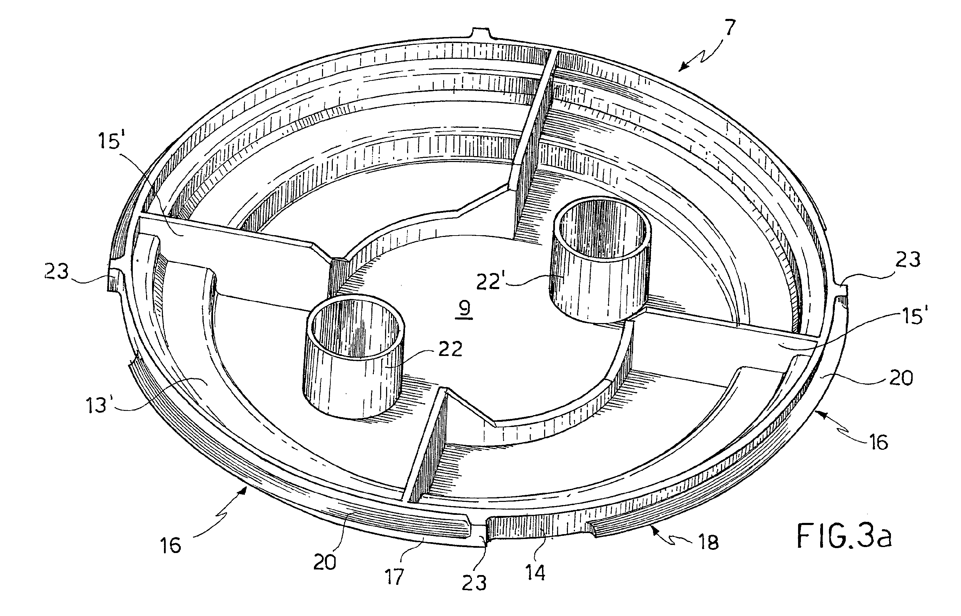

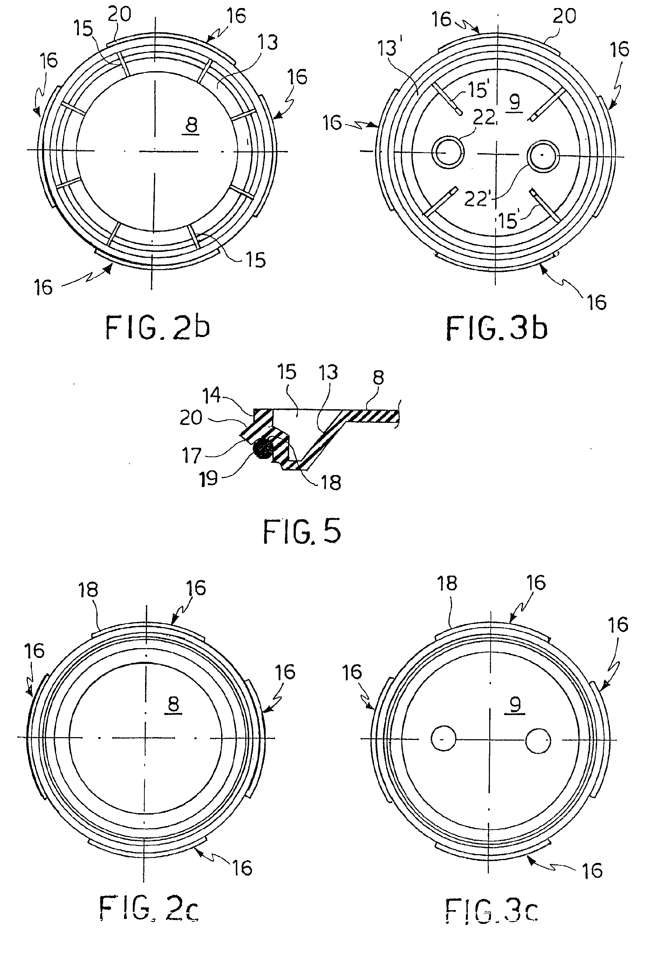

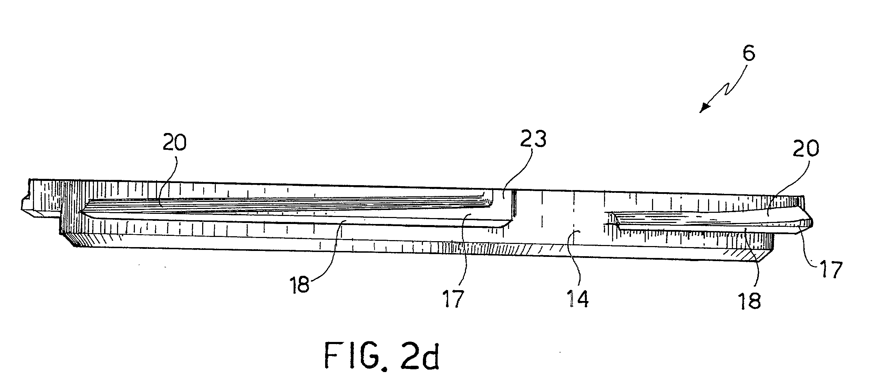

With reference to the figures, the toroidal LPG tank, indicated as a whole by the number 1, includes a hollow body 2, that in figure 2 is shown from a section view, fitted with a filler union 3 for loading LPG into the tank. The filler union 3 is positioned diagonally, so that, once the tank has been placed in the vehicle's spare wheel lodging, the opening of the filler union 2 faces upwards. An externally threaded ring nut 4 is linked to the filler union 2, to which a valve unit is attached (not shown). A filler pipe for LPG and an outlet pipe are normally connected to the valve unit. The hollow body 2, of a substantially toroidal shape, defines a central cavity 5, onto which the filler union 3 faces. In the drawing, the hollow body 2 that forms the tank, in section view, is circular in shape, squashed at the sides. It is obvious that totally circular or elliptic sections can also be foreseen.

The central cavity 5 can be sealed by an upper 6 and lower 7 closing means, that, in the example, are circular lids.

On the hollow body 2, along the upper and lower border of the central cavity 5, there are two stopping means 21, 21' for the closing means 6, 7. In the example described here, these stopping means 21, 21' are made from a series of pins arranged as a crown around the upper and lower mouths of the said central cavity 5.

The upper 6 and lower 7 closing means include, respectively, a cover portion 8, 9 and engaging means 10, 11 of the closing means with said stopping means 21, 21' placed on the hollow body 2. In the example, the engaging means are threaded coupling means.

Said cover portion 8,9 includes a flat part 12, 12' and a stepped part 13, 13' arranged as a crown around the said flat part. The engaging means 10, 11 are arranged on the edge of said stepped part 13, 13'. It is obvious that between the connection part of the engaging means 10, 11 to the stepped part 13, 13' and the flat part 12, 12' a difference in height is formed.

The stepped part 13, 13' may have a countersunk profile, as in the case of the upper closing means 6 or a stepped profile, as its name implies, like in the lower closing means 7 of the described example. It is obvious that the profile of the said stepped portion 13, 13' does not have a particular technical role, but can be varied according to one's preference.

Turning to the description of the upper closing means 6, in detail, the engaging means 10 include a circular profile 14 that extends substantially from the edge of the stepped part 13 to the level of the flat part 12. In this way, a ring-shaped hollow is created between the upper crest of the engaging means 10 and the flat part 12. A plurality of ribs 15, which radiate across the said ring-shaped hollow and connect the circular profile 14 to the flat portion 12, they are handgrip means of the said upper closing means 6.

Going back to the description of the engaging means 10, from the circular profile 14 a number of circular arch-shaped teeth 16 protrude externally. Each of these teeth 16 have a crested surface 17, a first side surface 18 in the shape of a washer housing 19, especially for an O-ring, and a second lateral surface that acts as the coupling surface 20 with the said stopping means 21 placed on the hollow body 2 surface. In the example described, there are four teeth 16 and the coupling surface 20 of each of these has a helical tract profile that acts as an aid for screwing on the closing means 6, 7 and the stopping means 21.

The teeth 16 also have screwing-on stopping means, which in the example comprise a relief 23 that extends from the far end of the length of engagement of the tooth 16 up to the edge of the circular profile 14.

We now come to the description of the lower closing means 7, the flat part 12' has two holes from which the respective coupling boxes 22, 22' extend. In the example these coupling boxes 22, 22' protrude enough to fill the difference in height between the flat part 12' and the crest of said engaging means 11 with the stopping means 21' placed on the hollow body 2. These engaging means 11 are totally similar to those described above for the upper closing means 6. In this case too, handgrip means are foreseen for the said lower closing means 7. These handgrip means are made up of a number of radiating ribs 15'.

It should be noted that, in addition to constituting handgrip means, the ribs 15, 15' of the closing means also strengthen the structure.

The upper 6 and lower 7 closing means are made in metal or plastic, the latter being the preferred material. The upper closing means 6 will preferably include at least one portion in transparent material, particularly glass or transparent plastic, or may be made totally from transparent material. This is in order to allow visual access to the interior of the central cavity 5 and therefore to the valve unit.

The lower closing means 7 can be nevertheless made in transparent material too.

The tank 1 is assembled in the following manner.

After having installed the valve unit on the ring nut 4, the lower closing means are linked to the hollow body 2 by screwing down - up to when the stopping means 23 hit against the locking means 21 - and the load pipe for LPG and the outlet pipe will be inserted into the coupling boxes holes 22, 22', so that the outlets reach the exterior. Alternatively, it will be possible to assemble first the lower closing means 7 and then the valve unit.

At this point, the assembly will be completed by joining, as described above, the upper closing means 6 to the hollow body 2, by screwing down. In this way the central cavity 5, which contains the valve unit, will be sealed from the outside, thanks to the presence of the seal 19 that acts on the surface of the hollow body 2.

The advantages of the device of the invention are immediately clear.

First of all, the upper and lower closing means of the central cavity 5 allow the latter to be isolated in order to create a sealed chamber that prevents leakage of LPG, and therefore pollution of the baggage compartment and passenger compartment of the vehicle.

The upper and lower closing means are attached to the tank independently. The upper cover can therefore be removed without having to remove the tank from its lodging, as instead occurred in the prior art. Easy fast access to the valve unit is thus possible.

The device, subject of the invention, is also simple to make, the lids being obtainable enbloc. Fixing the closing means to the tank does not require the use of screws/nuts, which simplifies assembly considerably.

The cost of the device herein is also limited, as the lids can be made in plastic.

It is obvious that only some particular embodiments of the toroidal tank, subject of the present invention, have been described. Those expert in the field will be able to carry out all the modifications necessary to adapt it to particular applications, without however, departing from the protected scope of the herein invention.

For example, it will be possible to replace the screw coupling means with different coupling means, for example with bayonets and/or snap on. In this case, the term "screwing down" used in this description and the following claims must be intended as the movement to be given to the lower 6 and upper 7 closing means until they stop.

## Claims

1. Tank (1) for LPG of a substantially toroidal shape, including a hollow body (2) and a filler union (3) that connects the inside of the tank with the outside, with said substantially toroidal tank defining a central empty cavity (5) into which the said filler union (3) juts, said tank (1) also including upper (6) and lower (7) closing means for said central cavity (5), **characterised by** the fact that said upper (6) and lower (7) closing means are attached to the surface of said hollow body (2) independently from each other.

2. The tank (1) for LPG according to claim 1, said tank (1) including, along the upper and lower edge of the central cavity (5) stopping means (21, 21') for said closing means (6,7) and said upper (6) and lower (7) closing means including engaging means (10, 11) with said stopping means (21, 21').

3. The tank (1) for LPG as according to claim 2, wherein said stopping means (21,21') are made up of a plurality of pins arranged as a crown around the upper and lower mouths of said central cavity (5).

4. The tank (1) for LPG according to claim 2 or 3, wherein said upper (6) and lower (7) closing means include also a cover portion (8,9) on the edge of which said engaging means (10, 11) are attached.

5. The tank (1) for LPG according to any of the claims from 2 to 4, wherein said engaging means (10, 11) are thread-coupling means.

6. The tank (1) for LPG according to any of the claims from 2 to 5, wherein said engaging means (10, 11) of the closing means (6, 7) include a circular profile (14) from which a number of teeth (16) protrude externally, each of said teeth (16) having a lateral surface (18) in the form of washer seat (19) and a coupling surface (20) with said stopping means (21, 21').

7. The tank (1) for LPG according to the claim 6, wherein said coupling surface (20) has a helical tract profile.

8. The tank (1) for LPG according to any of the claims from 2 to 6, wherein said circular profile (14) includes stopping means (23) for the screwing down action.

9. The tank (1) for LPG according to claim 8, wherein said stopping means include a relief (23) that extends from the end of the length of engagement of said teeth (16) to the edge of said circular profile (14).

10. The tank (1) for LPG according to any of the claims from 1 to 9, wherein said closing means (6, 7) include handgrip means (15, 15'), on the externally facing surface.

11. The tank (1) according to claim 10, wherein said handgrip means include a number of radiating ribs (15, 15').

12. The tank(1) according to any of the claims from 1 to 11, wherein at least said upper closing means (6) have at least a portion that is transparent.
